# EUROPEAN PATENT APPLICATION

(11) **EP 1 967 778 A1**
(43) Date of publication of application: **10.09.2008**
(21) Application number: 08151652.8
(22) Date of filing: 20.02.2008
(51) Int. Cl.: F16K 31/06, B60T 8/36

(54) **Biased actuator systems**

(30) Priority: 07.03.2007 US 715104
(71) Applicant: Delphi Technologies, Inc., Troy, Michigan 48007 (US)
(72) Inventor: Cano, Jose R., Centerville, OH 45459 (US)
(74) Representative: Robert, Vincent

(57) **Abstract**

An actuator system including a receiving body defining a mounting bore, a inlet fluid channel, an outlet fluid channel and a connecting channel between the inlet fluid channel and the outlet fluid channel, a valve seat disposed within the connecting channel, and an actuator assembly connected to the receiving body, the actuator assembly including a sealing tip extending into the mounting bore, the sealing tip being adapted to sealingly engage the valve seat.

## Description

### TECHNICAL FIELD

The present application is directed to biased actuator systems and, more particularly, to normally open and normally closed actuator systems.

### BACKGROUND OF THE INVENTION

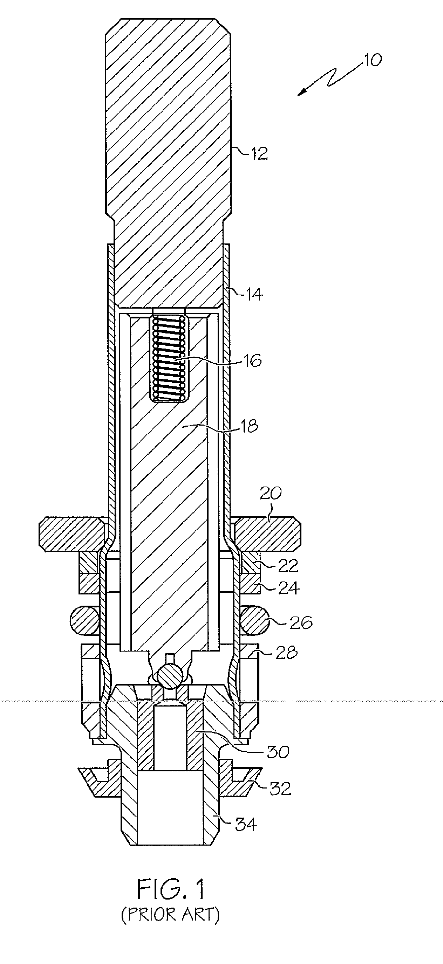

Referring to Fig 1, a typical normally closed actuator, generally designated 10, may include a stop 12, a tube 14, a spring 16, a plunger 18, a flange 20, a ring 22, a back-up ring 24, an O-ring 26, a filter 28, a valve seat 30, a lip seal 32 and a lower housing 34.

A typical process for assembling actuator 10 may include multiple steps. For example, a first step may include press fitting the valve seat 30 into the lower housing 34, the second step may include press fitting the tube 14 to the lower housing 34, the third step may include laser welding the tube 14 to the lower housing 34, the fourth step may include positioning the plunger 18, the spring 16 and the stop 12 into the tube 14 and the fifth step may include laser welding the stop 12 to the tube 14. Additional steps are necessary to attach the filter 28, the ring 22, the back-up ring 24, the O-ring 26 and the lip seal 32.

The lower housing 34 may interface the actuator 10 with a mounting bore (not shown) of a hydraulic modulator (not shown) of a vehicle anti-lock braking system.

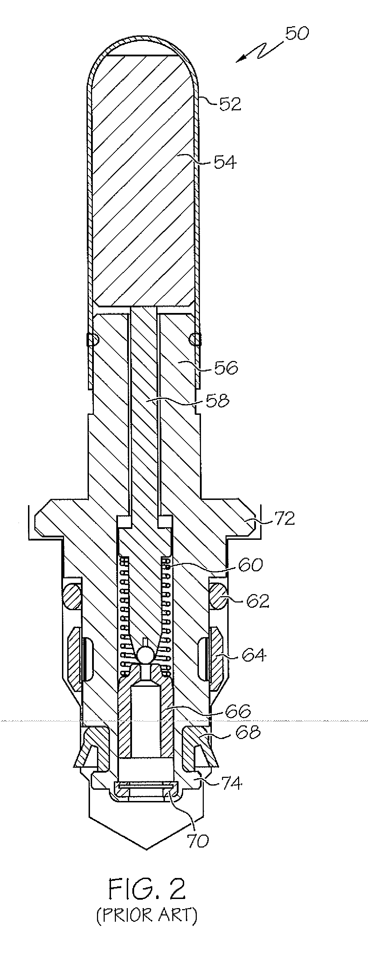

Referring to Fig. 2, a typical normally open actuator, generally designated 50, may include a cup 52, a plunger 54, a housing 56, a rod 58, a spring 60, an O-ring 62, a band filter 64, a valve seat 66, a lip seal 68 and a flat filter 70. The housing 56 may include a flange 72 and a mounting portion 74.

A typical process for assembling actuator 50 may include multiple steps. For example, a first step may include positioning the rod 58 and the spring 60 into the housing, the second step may include press fitting the valve seat 66 into the housing 56 and the third step may include positioning the plunger 54 into the cup 52 and laser welding the cup 52 to the housing 56. Additional steps are necessary to attach the O-ring 62, the band filter 64, the lip seal 68 and the flat filter 70.

The mounting portion 74 of the housing 56 may interface the actuator 50 with a mounting bore (not shown) of a hydraulic modulator (not shown) of a vehicle anti-lock braking system.

Actuators 10, 50 have provided satisfactory performance and custom design and component characteristics, including selective material properties and supplier selection. However, such actuators have the disadvantage of large size, complex design and increased component, manufacturing and assembly costs.

Accordingly, there is a need for normally open and normally closed actuators having a simplified design and a smaller hydraulic package that are capable of being manufactured and assembled at a relatively low cost.

### SUMMARY OF THE INVENTION

In one aspect, the disclosed actuator system includes a receiving body defining a mounting bore, an inlet fluid channel, an outlet fluid channel and a connecting channel between the inlet fluid channel and the outlet fluid channel, a valve seat disposed within the connecting channel, and an actuator assembly connected to the receiving body, the actuator assembly including a sealing tip extending into the mounting bore, the sealing tip being adapted to sealingly engage the valve seat.

In another aspect, the disclosed actuator system includes a receiving body defining a mounting bore, an inlet fluid channel, an outlet fluid channel and a connecting channel between the inlet fluid channel and the outlet fluid channel, a valve seat disposed within the connecting channel, and an actuator assembly including a cup having a closed proximal end and an open distal end, the open distal end being connected to the receiving body, a stop fixedly disposed within the cup, a plunger slideably received within the cup, the plunger including a distal end extending into the mounting bore, the distal end including a sealing tip, and a biasing device disposed between the stop and the plunger to urge the plunger away from the stop such that the sealing tip engages the valve seat.

In another aspect, the disclosed actuator system includes a receiving body defining a mounting bore, an inlet fluid channel, an outlet fluid channel and a connecting channel between the inlet fluid channel and the outlet fluid channel, a valve seat disposed within the connecting channel, an actuator assembly including a cup having a proximal end and a distal end, a housing defining an elongated channel, the housing including a distal end connected to the receiving body and a proximal end connected to the distal end of the cup, and a rod slideably received within the elongated channel, the rod including a distal end extending into the mounting bore, the distal end including a sealing tip, and a biasing device positioned in the mounting bore to bias the distal end of the rod away from the valve seat.

Other aspects of the disclosed actuator systems will become apparent from the following description, the accompanying drawings and the appended claims.

### BRIEF DESCRIPTION OF THE DRAWINGS

Fig. 1 is a front elevational view, in section, of a prior art normally closed actuator;

Fig. 2 is a front elevational view, in section, of a prior art normally open actuator;

Fig. 3 is a front elevational view, in section, of one aspect of the disclosed normally closed actuator system; and

Fig. 4 is a front elevational view, in section, of one aspect of the disclosed normally open actuator system.

### DESCRIPTION OF THE PREFERRED EMBODIMENTS

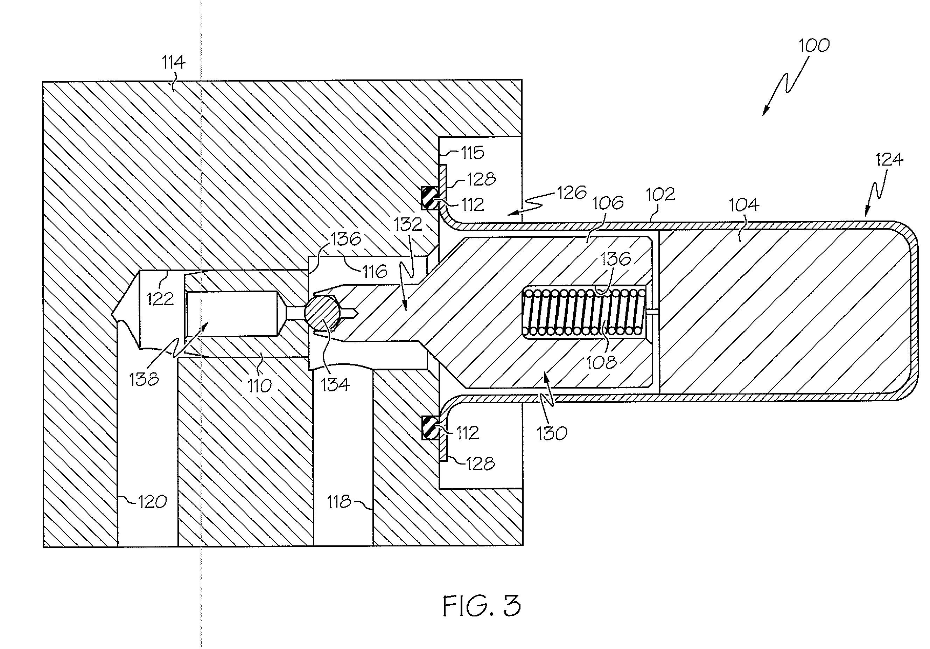

Referring to Fig. 3, one aspect of the disclosed normally closed actuator system, generally designated 100, may include a cup 102, a stop 104, a plunger 106, a biasing device 108, a valve seat 110, an O-ring 112 and a receiving body 114. The receiving body 114 may include a mating surface 115, a mounting bore 116, an inlet fluid channel 118, an outlet fluid channel 120 and a connecting channel 122 between the inlet 118 and outlet 120 fluid channels. In one aspect, the receiving body 114 may be a hydraulic modulator of a vehicle anti-lock brake system.

The cup 102 may include a closed proximal end 124, an open distal end 126 and a flange 128 disposed at the distal end 126. In one aspect, the cup 102 may have a generally elongated, cylindrical shape and may be formed from a generally rigid material, such as steel, by a drawing process.

The stop 104 may be formed from a magnetizable material, such as steel, and may be positioned in the proximal end 124 of the cup 102. In one aspect, the stop 104 may be positioned in and, optionally, connected to the proximal end 124 of the cup 102 using any available technique, such as press fitting, laser welding or both.

The plunger 106 may be formed from a magnetizable material, such as steel, and may include a proximal body portion 130 and a distal engaging portion 132. The distal engaging portion 132 of the plunger 106 may include a sealing tip 134, such as a ball, adapted to closely engage the valve seat 110. The proximal body portion 130 of the plunger 106 may be closely and slideably received within the cup 102 and the distal engaging portion 132 of the plunger 106 may extend beyond the flange 128 of the cup 102 and into the mounting bore 116 of the receiving body 114 when the cup 102 is connected to the receiving body 114 in the manner shown in Fig. 3.

While reference has been made to a single stage plunger assembly 106, those skilled in the art will appreciate that various plunger assemblies and designs may be used, including two-stage plunger assemblies, without departing from the scope of the disclosed actuator system 100.

The biasing device 108 may be any device capable of urging the plunger 106 away from the stop 104. In one aspect, the biasing device 108 may be a spring, such as a coil spring, mounted in a bore 136 in the proximal body portion 130 of the plunger 106.

The valve seat 110 may be formed from a hardened material, such as hardened steel, and may include a sealing surface 136 and may define a fluid flow channel 138 therethrough. The sealing surface 136 of the valve seat 110 may be sized and shaped to closely engage the sealing tip 134 of the plunger 106.

As shown in Fig. 3, the valve seat 110 may be positioned in the connecting channel 122 of the receiving body 114 between the inlet 118 and outlet 120 fluid channels. In one aspect, the valve seat 110 may be press fit into the receiving body 114. In another aspect, the valve seat 110 and the receiving body 114 may be formed as a monolithic body (not shown).

In the assembled configuration shown in Fig. 3, the flange 128 of the cup 102 may engage the mating surface 115 of the receiving body 114 to form a fluid tight seal therebetween. The optional O-ring 112 may facilitate the fluid tight connection between the cup 102 and the receiving body 114. The biasing device 108 may urge the plunger 106 away from the stop 104 such that the sealing tip 134 of the plunger 106 engages the sealing surface 136 of the valve seat 110, thereby obstructing fluid flow through the fluid flow channel 138 of the valve seat 110.

The actuator system 100 may be positioned in a magnetic field by, for example, wrapping the cup 102 with a coil (not shown). When a sufficient magnetic field is present (e.g., a current is passing through the coil) the stop 102 and plunger 106 may become magnetized and magnetically attracted to each other. When the magnetic attraction is sufficient to overcome the biasing force of the biasing device 108 and hydraulic pressure forces, the plunger 106 may be urged in the direction of the stop 102, thereby disengaging the sealing tip 134 of the plunger from the sealing surface 136 of the valve seat 110 and creating a fluid flow path from the inlet fluid channel 118, through the fluid flow channel 138 of the valve seat 110 and exiting through the outlet fluid channel 120. When the magnetic field ceases, the biasing device 108 may urge the plunger 106 away from the stop 102 such that the sealing tip 134 of the plunger 106 re-engages the sealing surface 136 of the valve seat 110 and obstructs the fluid flow path.

Accordingly, the disclosed actuator system 100 provides a normally closed actuator system integrating the valve seat 110 and the receiving body 114 (e.g., hydraulic modulator unit), which provides reduced manufacturing and assembly costs, a simplified design, and a smaller hydraulic package that may be modified to work with various electrical and/or magnetic requirements.

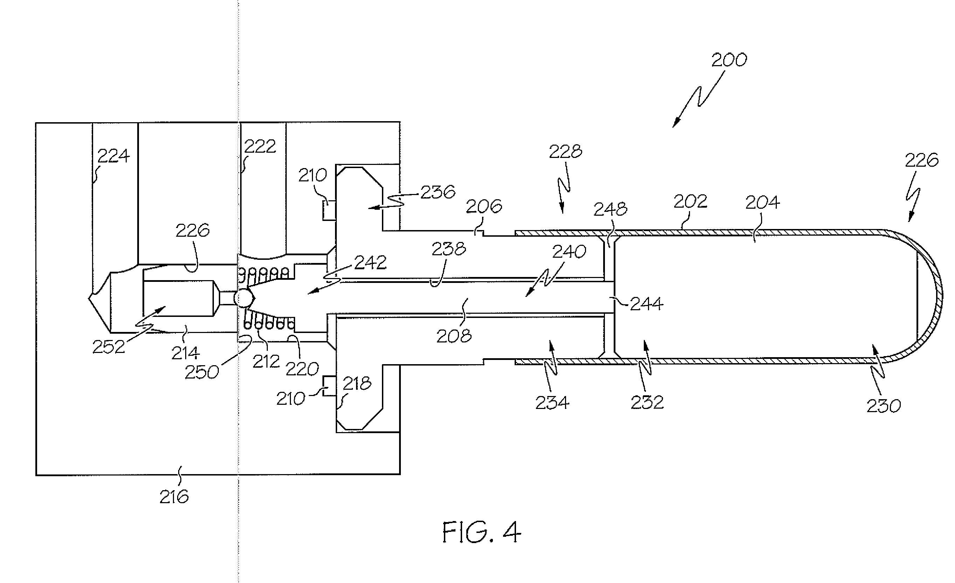

Referring to Fig. 4, one aspect of the disclosed normally open actuator system, generally designated 200, may include a cup 202, a plunger 204, a housing 206, a rod 208, an O-ring 210, a biasing device 212, a valve seat 214 and a receiving body 216. The receiving body 216 may include a mating surface 218, a mounting bore 220, an inlet fluid channel 222, an outlet fluid channel 224 and a connecting channel 226 between the inlet 222 and outlet 224 fluid channels. In one aspect, the receiving body 216 may be a hydraulic modulator of a vehicle anti-lock brake system.

The cup 202 may include a closed proximal end 226 and an open distal end 228. In one aspect, the cup 202 may have a generally elongated, cylindrical shape and may be formed from a generally rigid material, such as steel, by a drawing process.

The plunger 204 may be formed from a magnetizable material, such as steel, and may include a proximal end 230 and a distal end 232. The plunger 204 may be closely and slideably received within the cup 202.

The housing 206 may be formed from a magnetizable material, such as steel, and may include a proximal body portion 234, a distal flange portion 236 and a bore 238 extending generally axially through the housing 206. The open distal end 228 of the cup 202 may be connected to the proximal body portion 234 of the housing 206 by, for example, press fitting, laser welding or both.

The rod 208 may include an elongated body portion 240, a distal engaging portion 242 and a proximal end portion 244. The distal engaging portion 242 of the rod 208 may include a sealing tip 246, such as a ball, adapted to sealingly engage the valve seat 214. The elongated body portion 240 of the rod 208 may extend through the bore 238 of the housing 206 such that the proximal end portion 244 is positioned in the gap 248 between the plunger 204 and the housing 206 when the system 200 is not actuated. The distal engaging portion 242 of the rod 208 may extend distally beyond the flange portion 236 of the housing 206 and into the mounting bore 220 of the receiving body 216 when the housing 206 is connected to the receiving body 216 in the manner shown in Fig. 4.

The biasing device 212 may be any device capable of urging the rod 208 away from the valve seat 214. In one aspect, the biasing device 212 may be a spring, such as a coil spring, mounted in the mounting bore 220 to urge the distal engaging portion 242 of the rod 208 away from the valve seat 214.

The valve seat 214 may be formed from a hardened material, such as hardened steel, and may include a sealing surface 250 and may define a fluid flow channel 252 therethrough. The sealing surface 250 of the valve seat 214 may be sized and shaped to closely engage the sealing tip 246 of the rod 208.

As shown in Fig. 4, the valve seat 214 may be positioned in the connecting channel 226 of the receiving body 216 between the inlet 222 and outlet 224 fluid channels. In one aspect, the valve seat 214 may be press fit into the receiving body 216. In another aspect, the valve seat 214 and the receiving body 216 may be formed as a monolithic body (not shown).

In the assembled configuration shown in Fig. 4, the flange portion 236 of the housing 206 may engage the mating surface 218 of the receiving body 216 to form a fluid tight seal therebetween. The optional O-ring 210 may facilitate the fluid tight connection between the housing 206 and the receiving body 216. The biasing device 212 may urge the rod 208 away from the sealing surface 250 of the valve seat 214 such that the sealing tip 246 of the rod 208 is disengaged from the sealing surface 250 of the valve seat 214, thereby allow fluid flow from the inlet fluid channel 222, through the fluid flow channel 252 of the valve seat 214, and exiting through the outlet fluid channel 224.

The actuator system 200 may be positioned in a magnetic field by, for example, wrapping the cup 202 and housing 206 with a coil (not shown). When a sufficient magnetic field is present (e.g., a current is passing through the coil) the plunger 204 and the housing 206 may become magnetized and magnetically attracted to each other. When the magnetic attraction is sufficient to overcome the biasing force of the biasing device 212 and hydraulic pressure forces, the plunger 204 may be urged in the direction of the housing 206 (i.e., distally), thereby engaging the proximal end portion 244 of the rod 208 and driving the rod 208 distally such that the sealing tip 246 of the rod 208 engages the sealing surface 250 of the valve seat 214 to obstruct fluid flow through the fluid flow channel 252 of the valve seat 214. When the magnetic field ceases, the biasing device 212 may urge the rod 208 away from the valve seat 214 such that the sealing tip 246 of the rod 208 disengages the sealing surface 250 of the valve seat 214 to allow fluid to flow from the inlet fluid channel 222, through the fluid flow channel 252 of the valve seat 214, and exiting through the outlet fluid channel 224.

Accordingly, the disclosed actuator system 200 provides a normally open actuator system integrating the valve seat 214 and the receiving body 216 (e.g., hydraulic modulator unit), which provides reduced manufacturing and assembly costs, a simplified design, and a smaller hydraulic package that may be modified to work with various electrical and/or magnetic requirements

Although various aspects of the disclosed actuator systems have been shown and described, modifications may occur to those skilled in the art upon reading the specification. The present application includes such modifications and is limited only by the scope of the claims.

## Claims

1. An actuator system comprising:
a receiving body defining a mounting bore, an inlet fluid channel, an outlet fluid channel and a connecting channel between said inlet fluid channel and said outlet fluid channel;
a valve seat disposed within said connecting channel; and
an actuator assembly connected to said receiving body, said actuator assembly including a sealing tip extending into said mounting bore, said sealing tip being adapted to sealingly engage said valve seat.

2. The system of claim 1 wherein said receiving body is a hydraulic modulator.

3. The system of claim 1 wherein said valve seat is press fit into said connecting channel.

4. The system of claim 1 wherein said valve seat is formed from a hardened material.

5. The system of claim 1 wherein said sealing tip disengages said valve seat when an effective magnetic field is applied to said actuator assembly.

6. The system of claim 1 wherein said sealing tip sealingly engages said valve seat when an effective magnetic field is applied to said actuator assembly.

7. The system of claim 1 further comprising a biasing device positioned in said mounting bore, said biasing device being adapted to bias said sealing tip away from said valve seat.

8. The system of claim 1 wherein said actuator assembly further includes a plunger, a housing and a rod, and wherein said sealing tip is positioned on said rod.

9. The system of claim 1 wherein said actuator assembly further includes a plunger, a stop and a biasing device adapted to bias said plunger away from said stop.

10. The system of claim 9 wherein said sealing tip is positioned on said plunger.

11. A normally closed actuator system comprising:
a receiving body defining a mounting bore, an inlet fluid channel, an outlet fluid channel and a connecting channel between said inlet fluid channel and said outlet fluid channel;
a valve seat disposed within said connecting channel; and
an actuator assembly including a cup having a closed proximal end and an open distal end, said open distal end being connected to said receiving body, a stop fixedly disposed within said cup, a plunger slideably received within said cup, said plunger including a distal end extending into said mounting bore, said distal end including a sealing tip, and a biasing device disposed between said stop and said plunger to urge said plunger away from said stop such that said sealing tip engages said valve seat.

12. The system of claim 11 wherein said receiving body is a hydraulic modulator.

13. The system of claim 11 wherein said valve seat is press fit into said connecting channel.

14. The system of claim 11 wherein said valve seat is formed from a hardened material.

15. The system of claim 11 wherein said sealing tip disengages said valve seat when an effective magnetic field is applied to said actuator assembly.

16. A normally open actuator system comprising:
a receiving body defining a mounting bore, an inlet fluid channel, an outlet fluid channel and a connecting channel between said inlet fluid channel and said outlet fluid channel;
a valve seat disposed within said connecting channel;
an actuator assembly including a cup having a proximal end and a distal end, a housing defining an elongated channel, said housing including a distal end connected to said receiving body and a proximal end connected to said distal end of said cup, and a rod slideably received within said elongated channel, said rod including a distal end extending into said mounting bore, said distal end including a sealing tip; and
a biasing device positioned in said mounting bore to bias said distal end of said rod away from said valve seat.

17. The system of claim 16 wherein said receiving body is a hydraulic modulator.

18. The system of claim 16 wherein said valve seat is press fit into said connecting channel.

19. The system of claim 16 wherein said valve seat is formed from a hardened material.

20. The system of claim 16 wherein said sealing tip sealingly engages said valve seat when an effective magnetic field is applied to said actuator assembly.
